# EUROPEAN PATENT SPECIFICATION

(11) **EP 3 179 701 B1**
(45) Date of publication and mention of the grant of the patent: **30.01.2019**
(21) Application number: 16186074.7
(22) Date of filing: 29.08.2016
(51) Int. Cl.: H04L 29/08

(54) **FILE UPLOAD AND DOWNLOAD METHODS AND ASSOCIATED SERVER**
DATEI-UPLOAD- UND -DOWNLOAD-VERFAHREN UND ZUGEHÖRIGER SERVER
PROCÉDÉS DE TÉLÉCHARGEMENT DE FICHIER ET SERVEUR ASSOCIÉ

(30) Priority: 09.12.2015 TW 104141257
(43) Date of publication of application: 14.06.2017
(73) Proprietor: Synology Incorporated, Taipei 103 (TW)
(72) Inventor: Sung, Ying-Chang, 111 Taipei City (TW); Pai, Che-Wei, 200 Keelung City (TW)
(74) Representative: Becker Kurig Straus

(56) References cited:
- EP-A2- 2 357 558
- US-A1- 2003 046 415
- US-A1- 2011 252 071

## Description

The present invention relates to file upload and download methods, and more particularly, to a transmission resuming method.

When a user utilizes a browser to upload a file to a remote server or download a file from the server, if uploading/ downloading of the file is interrupted (e.g. the network is disconnected) or the browser is accidentally shut down, the file is required to be re-uploaded/downloaded. In order to complete these tasks, the user must open a folder to find the file to be uploaded or access a location for storing the file to be downloaded. This may cause inconvenience to the user and consume unnecessary network bandwidth.

US 2003/046415 A1 discloses an invention to transmit and receive a very large file with high reliability and with efficiency using the Internet, which is apt to be unstable, without special operation in a client PC. A file transmitting system according to the related art invention is configured as a system in which a client PC is connected via Internet to a processing system comprising a WWW server, a management terminal server, an AP server, and a file server. Transmission of file data between a PC and a transfer file of the file server is performed using HTTPS (HyperText Transfer Protocol Secure) that uses a dedicated program. The file data is divided into data having a fixed size, each of which is compressed for transmission. In addition, in preparation for occurrence of a failure, a checkpoint for retransmission is provided for each divided data. The dedicated program is devised so that multi-platform is supported. In addition to it, the dedicated program can be used by downloading it from the server as part of PC operation.

This in mind, the application aims at providing servers and associated file upload and download methods in order to solve the above-mentioned problems.

This is achieved by servers and associated file upload and download methods according to claims 1, 5, 8 and 13. The dependent claims pertain to corresponding further developments and improvements.
Fig. 1 is a diagram illustrating a system according to an embodiment of the present invention.
Fig. 2 is a flowchart illustrating a method of an electronic device uploading a file to a server.
Fig. 3 is a diagram illustrating a scenario in which a user drags a file to a specific web page displayed by a browser according to an embodiment of the present invention.
Fig. 4 is a flowchart illustrating a method of using an electronic device to download a file from a server.

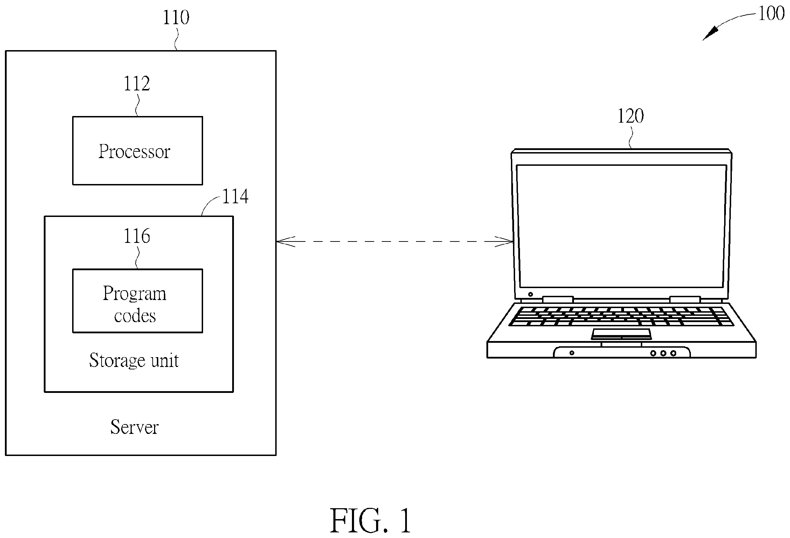

Refer to Fig. 1, which is a diagram illustrating a system 100 according to an embodiment of the present invention. As shown in Fig. 1, the system 100 includes a server 110 and an electronic device 120, in which the electronic device 120 is connected to the server 100 via a network such as the Internet, and the server 110 at least includes a processor 112 and a storage unit 114. The storage unit 114 stores a plurality of sets of program codes 116, and the processor 112 is arranged to execute a portion of the plurality of sets of program codes 116 to control operations of the server 112. Note that, although Fig. 1 only shows some elements in the server 110, one skilled in the art will readily know that there are other peripheral elements which may operate with the processor 112, and the storage unit 114 may substantially include a plurality of identical/different storage chips.

In this embodiment, the server 110 may be a file server, which is used as a cloud storage space so that the electronic device 120 can upload/download files through a browser via the Internet, but the present invention is not limited thereto. The server 110 may also be a multi-functional server (e.g. an all-in-one server), which can be used as a file server, web page server, remote authentication dial-in user service (RADIUS) server, remote access virtual private network server, proxy server, etc. In addition, the electronic device 120 may be any electronic device capable of using a browser, e.g. a desktop computer, laptop computer, smart phone, or tablet.

The plurality of sets of program code 116 includes a specific program code. For example, the specific program code in this embodiment may be a JavaScript code, which is arranged to be read by the electronic device 120 via a network and executed to partition a file into a plurality of portions in the electronic device 120, sequentially upload the plurality of portions to the server 110, real-time record upload progress of the file, and when uploading of the file is interrupted and the file is required to be re-uploaded, upload the remaining portions of the file that are not yet uploaded to the server 110 according to the recorded upload progress. That is, the uploaded portions of the file are not uploaded again, and the un-uploaded portions of the file are directly uploaded to the server 110. Operations associated with the specific program code and the system 100 are discussed in greater detail below.

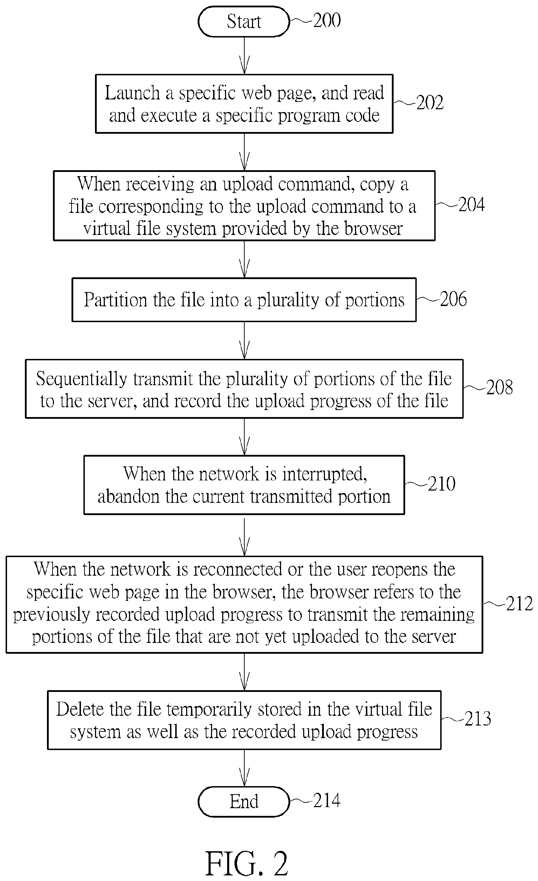

Fig. 2 is a flowchart illustrating a method of the electronic device 120 uploading a file to the server 110. In Step 200, the flow starts, and the electronic device 120 is connected to the server 110 via the network. In Step 202, the browser of the electronic device 120 launches a specific web page. At this time, the electronic device 120 will read the specific program code in the plurality of sets of program code 116 from the server 110, and execute it using a browser. In an embodiment, the specific web page may require the user of the electronic device 120 to enter a password for accessing the user account, so that the user can be identified and recorded.

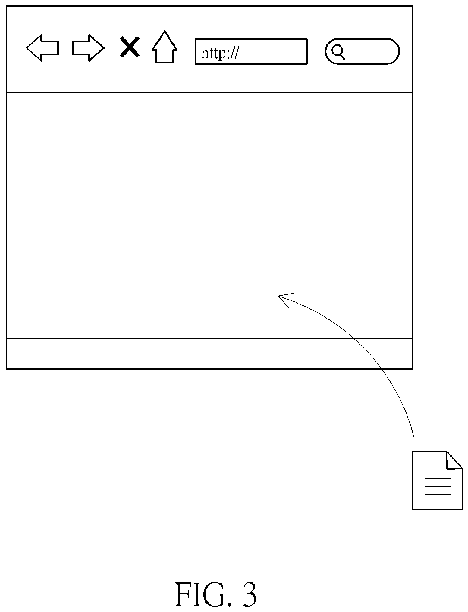

In Step 204, when the electronic device 120 receives an upload command, such as a command triggered by dragging a file to the specific web page in the browser as shown in Fig. 3, the file will be copied to the virtual file system provided by the browser. In an embodiment, when the electronic device 120 receives the upload command, the server 110 may allocate file uploading space according to a user identification (ID). More specifically, a predetermined size of file uploading space may be set up for a user ID, and if a user logins on the web page by such user ID, the server 110 may provide the predetermined size of file uploading space for the user.

In Step 206, the browser of the electronic device 120 partitions the file into a plurality of portions (e.g. a plurality of blocks), and is ready to sequentially transmit the plurality of partitions to the server 110. Since the transmission of the portions of the file can be performed according to the file application programming interface (File API) defined in the HTML5 specification, some detailed operations are omitted here for brevity.

In Step 208, the browser sequentially transmits the plurality of portions of the file to the server 110 via the network. At this point, both the browser of the electronic device 120 and the server 110 will record the upload progress of the file. The browser of the electronic device 120 will record which portion of the file is the last portion to have been successfully transmitted, and store the recorded progress into the virtual file system. The processor 112 of the server 110 will record which portion of the file is the last portion to have been successfully received, and store the recorded progress into the storage unit 114 or other storage devices. In an embodiment, the browser may display the upload progress of the file. In another embodiment, the browser may display a progress bar to indicate the progress of file transmission. In yet another embodiment, the progress bar may be divided into multiple blocks. For example, if the file is partitioned into 10 portions, then the progress bar can be divided into 10 blocks as well. Each block of the progress bar is used to indicate one of the portions of the file is successfully and completely transmitted to the server 110.

In Step 210, when the network is interrupted or shutdown, causing uploading of the file to be interrupted, the browser of the electronic device 120 and the server 110 will abandon the current transmitted portion (block), and the upload progresses of the browser of the electronic device 120 and the server 110 will not record this abandoned block. Assuming that the network connection of the electronic device 120 is interrupted when uploading the seventh block, for example, upload progress recorded by the browser of the electronic device 120 and the server 110 will record the sixth block as having been successfully uploaded/received. When uploading of the file is interrupted, the server 110 may temporarily store/reserve the received portions of the file in the storage unit 114 or other storage devices, rather than deleting them.

In Step 212, when the network is reconnected or the user reopens the specific web page in the browser, the browser of the electronic device 120 will refer to the previously recorded upload progress to transmit the remaining portions of the file that are not yet uploaded. Specifically, when the browser reconnects to the specific web page, the browser will execute a web page program code to demand the server 110 to check the user ID, and compare the aforementioned recorded upload progress of the file with an upload progress of the file recorded by the server 110, which can confirm whether the user ID is valid and determine an actual upload progress of the file. For example, if the browser records that the sixth portion of the file is the last portion to have been uploaded, but the server 110 records that the fifth portion of the file is the last portion to have been uploaded, the actual upload progress of the file will be the fifth portion. Note that only when the server 110 confirms that the user ID is valid will the server 110 allow the electronic device 120 to re-upload the file. Hence, when the server 110 confirms that user ID is still valid, the browser continues the uploading progress from the breakpoint of the file (e.g. the uploading begins from the sixth portion), rather than re-uploading the whole file.

In Step 213, when all portions of the file are uploaded to the server 110, the electronic device 120 deletes the file temporarily stored in the virtual file system provided by the browser, as well as the recorded upload progress. In Step 214, uploading of the file is completed, and the flow ends.

The file upload method provided by the present invention stores the file into the virtual file system of the browser so that the file can be partitioned and uploaded and its upload progress can be recorded at the same time. Hence, when the network connection is abnormal or the browser is shut down, resulting in the uploading of the file being interrupted, the browser may refer to the recorded upload progress to resume uploading, thus saving additional manual operations and improving the user experience.

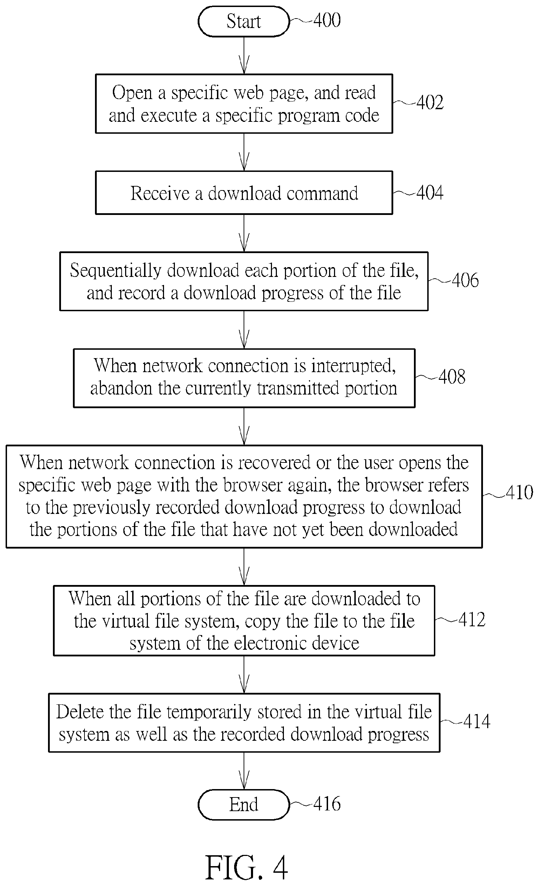

In addition to the method of uploading a file via a browser, another embodiment of the present invention discloses a method of downloading files from the server 110. Fig. 4 is a flowchart illustrating a method of using the electronic device 120 to download a file from the server 110. In step 400, the flow starts, and the electronic device 120 connects to the server 110 via a network. In step 402, the browser of the electronic device 120 opens a specific web page. At this moment, the electronic device 120 reads the specific program code in the plurality of sets of program code 116 from the server 110, and executes the specific program code via the browser. In an embodiment, the specific web page may further ask the user of the electronic device 120 to input a user ID and password, so that identification can be verified and recorded.

In step 404, the electronic device 120 receives a download command, e.g. the user requests the browser to download a file in the server 110. In step 406, the server 110 partitions the file into a plurality of portions (e.g. a plurality of blocks), and the browser of the electronic device 120 begins to sequentially download each portion of the file from the server 110 via the network. At this moment, the downloaded portions (e.g. blocks) are temporarily stored into a virtual file system provided by the browser, and both the browser of the electronic device 120 and the server 110 record a download progress of the file. The browser of the electronic device 120 will record which portion is the last portion to have been successfully received, and accordingly store the recorded progress into the virtual file system. Further, the processor 112 of the server 110 will record which portion is the last portion to have been successfully transmitted, and accordingly store the recorded progress into the storage unit 114 or other storage devices. In an embodiment, the browser may display the download progress of the file. In another embodiment, the browser may display a progress bar to indicate the progress of file transmission. In yet another embodiment, the progress bar may be divided into multiple blocks. For example, if the file is partitioned into 10 portions, then the progress bar can be divided into 10 blocks as well. Each block of the progress bar is used to indicate one of the portions of the file is successfully and completely downloaded from the server 110.

In step 408, when network connection is interrupted or the browser is shut down, thereby interrupting downloading of the file, both the browser of the electronic device 120 and the server 110 will abandon the currently transmitted portion (e.g. block), and neither the browser of the electronic device 120 nor the server 110 will record this abandoned block. Assuming that the network connection is interrupted when the electronic device 120 is downloading the seventh block, both the download progress recorded by the browser of the electronic device 120 and the download progress recorded by the server 110 will record that the sixth block is the last portion to have been successfully downloaded/transmitted. When downloading of the file is interrupted, the electronic device 120 will still temporarily store/reserve the received portions of the file into the virtual file system provided by the browser, rather than deleting the received portions of the file.

In step 410, when network connection is recovered or the user opens the specific web page with the browser again, the browser of the electronic device 120 will refer to the previously recorded download progress to download the portions of the file that have not yet been downloaded to the virtual file system. Specifically, when the browser is reconnected to the specific web page, the browser will utilize the web page program code to demand the server 110 to check the user ID and compare said recorded download progress with the download progress recorded by the server 110. The server 110 is asked to confirm whether the user ID is valid, and confirm the actual download progress of the file. For example, if the browser records that the third portion of the file is the last portion to have been downloaded, but the server 110 records that the fourth portion of the file is the last portion to have been transmitted, the actual download progress is the third portion. Note that only when the server 110 confirms that the user ID is still valid will the server 110 allow the electronic device 120 to re-download the file. Hence, when the server 110 confirms that the user ID is valid, the browser will continue downloading the portion from the breaking point of the file (i.e. from the fourth portion), rather than re-downloading the whole file. In this way, the portions which have already been received will not be re-downloaded.

In step 412, when all portions of the file are downloaded to the virtual file system, the electronic device 120 will copy the file to the file system of the electronic device 120. In step 414, the electronic device 120 deletes the file temporarily stored in the virtual file system provided by the browser, as well as the recorded download progress. In Step 416, the downloading of the file is completed, and the flow ends.

The file upload and download method and associated server of the present invention can directly resume file uploading/downloading from a point at which it breaks down. The problem of unnecessary re-uploading/downloading of the entire file as encountered in the related art can thereby be solved.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A server (110), comprising:
a processor (112), arranged to control operations of the server (110); and
a storage unit (114), arranged to store at least one program code (116), wherein the program code (116) is arranged to:
be read by an electronic device (120) via a network;
be executed by a browser of the electronic device(120);
when executed by said browser, have the browser perform the following steps:
verifying a user account by using a password and user ID entered by the user to identify the user,
receiving (204) an upload command generated by dragging a file to a specific web page;
copying (204) the file corresponding to the upload command to a virtual file system provided by the browser;
partitioning (206) a file in the virtual file system into a plurality of portions; and
sequentially uploading (208) the portions to the server (110) via the network, and recording (208) an upload progress of the file;
when uploading of the file is interrupted, have the browser perform the following steps:
abandoning (210) a current transmitted portion of the plurality of the portions; and
temporarily storing the received portions of the file in the storage unit (114); and
when uploading of the file is resumed, have the browser perform the following steps (212):
demanding the server (110) to check whether the user account is still valid;
comparing the recorded upload progress with an upload progress of the file recorded by the server (110) to generate a comparison result;
transmitting remaining portions of the file that have not yet been transmitted to the server (110) according to the comparison result; and
when all portions of the file are uploaded to the server (110), deleting (213) the file temporarily stored in the storage unit (114) and the recorded upload progress.

2. The server (110) of claim 1, adapted to, when the electronic device (120) sequentially uploads the plurality of portions to the server (110) via the network, record the upload progress of the file.

3. The server (110) of claim 2, adapted to, when the file is re-uploaded by the electronic device (120), receive only those portions of the file that have not yet been received.

4. The server (110) of claim 3, adapted to, after uploading of the file is interrupted, confirm whether a user identification of the electronic device (120) is valid before allowing the electronic device (120) to re-upload the file.

5. A file upload method by a browser, the file upload method comprising:
verifying a user account by using a password and user ID entered by the user to identify the user; receiving (204) an upload command generated by dragging a file to a specific web page;
copying (204) the file corresponding to the upload command to a virtual file system provided by the browser;
partitioning (206) the file in the virtual file system into a plurality of portions;
sequentially uploading (208) the portions to a server (110) via a network;
recording (208) an upload progress of the file in real-time;
when uploading of the file is interrupted, have the browser perform the following steps:
abandoning (210) a current transmitted portion of the plurality of the portions; and
temporarily storing the received portions of the file; and
when uploading of the file is resumed, have the browser perform the following steps (212):
demanding the server (110) to check whether the user account is still valid;
comparing the recorded upload progress with an upload progress of the file recorded by the server (110) to generate a comparison result;
transmitting remaining portions of the file that have not yet been transmitted to the server (110) according to the comparison result; and
when all portions of the file are uploaded to the server (110), deleting (213) the temporarily stored file and the recorded upload progress.

6. The file upload method of claim 5, **characterized in that** the file upload method further comprises:
when uploading of the file is interrupted and the file is re-uploaded, comparing the recorded upload progress with an upload progress of the file recorded by the server (110), to confirm an actual upload progress of the file; and
the step of transmitting the remaining portions of the file that have not yet been transmitted to the server (110) according to the recorded upload progress comprises:
transmitting the remaining portions of the file that have not yet been transmitted to the server (110) according to the actual upload progress of the file.

7. The file upload method of claim 5 **characterized in that** the file upload method further comprises:
after uploading of the file is interrupted, demanding the server (110) to check a user identification; and
after the server (110) confirms that the user identification is valid, re-uploading the file.

8. A server (110), comprising:
a processor (112), arranged to control operations of the server (110); and
a storage unit (114), arranged to store at least one program code (116), wherein the program code (116) is arranged to:
be read by an electronic device (120) via a network;
be executed by a browser of the electronic device (120);
when executed by said browser, have the browser perform the following steps:
verifying a user account by using a password and user ID entered by the user to identify the user;
receiving (404) a download command;
sequentially downloading (406) a plurality of portions of the file corresponding to the download command from the server (110) to a virtual file system provided by the browser via the network; and
recording (406) a download progress of the file in real-time to calculate a recorded download progress;
when downloading of the file is interrupted, have the browser perform the following steps:
abandoning (408) a current transmitted portion of the plurality of the portions; and
temporarily storing the received portions of the file in a storage unit (114); and
when downloading of the file is resumed, have the browser perform the following steps:
demanding the server (110) to check whether the user account is still valid;
comparing the recorded download progress with a download progress of the file recorded by the server (110) to generate a comparison result;
downloading (410) remaining portions of the file that have not yet been downloaded to the virtual file system according to the comparison result; and
when all portions of the file are downloaded to the virtual file system, copying (412) the file to the file system of the electronic device (120), deleting (414) the file temporarily stored in the storage unit (114) and the recorded upload progress.

9. The server (110) of claim 8, adapted to, when the electronic device (120) via the network sequentially downloads a plurality of portions of the file from the server (110) to the virtual file system provided by the browser, record a download progress of the file in real-time.

10. The server (110) of claim 9, adapted to, when downloading of the file is interrupted and the file is re-downloaded by the electronic device (120), compare the recorded download progress with a download progress of the file recorded by the electronic device (120).

11. The server (110) of claim 9, adapted to re-download the file so that only portions of the file that have not yet been received by the electronic device are transferred, rather than transferring also already received portions of the file.

12. The server (110) of claim 11, adapted to, after downloading of the file is interrupted, confirm whether a user identification of the electronic device (120) is valid before allowing the electronic device (120) to re-download the file.

13. A file download method by a browser, the file download method comprising:
verifying a user account by using a password and user ID entered by the user to identify the user;
receiving (404) a download command;
sequentially downloading (406) a plurality of portions of the file corresponding to the download command to a virtual file system provided by the browser via a network, and recording a download progress of the file;
when downloading of the file is interrupted, have the browser perform the following steps (408):
abandoning a current transmitted portion of the plurality of the portions; and
temporarily storing the received portions of the file;
when downloading of the file is resumed, have the browser perform the following steps:
demanding a server (110) to check whether the user account is still valid;
comparing the recorded download progress with a download progress of the file recorded by the server (110) to generate a comparison result;
downloading (410) remaining portions of the file that have not yet been downloaded to the virtual file system according to the comparison result; and
when all portions of the file are uploaded to the server (110), deleting (414) the temporarily stored file and the recorded upload progress;
and
when all portions of the file are downloaded to the virtual file system, copying (412) the file to a file system of the electronic device (120) .

14. The file download method of claim 13, **characterized in that** the file download method further comprises:
when downloading of the file is interrupted and the file is re-downloaded, comparing the recorded download progress with a download progress of the file recorded by the server (110), to confirm an actual download progress of the file; and
the step of downloading the remaining portions of the file that have not yet been downloaded to the virtual file system according to the recorded download progress comprises:
downloading remaining portions of the file to the virtual file system according to the actual download progress of the file which is confirmed.

15. The file download method of claim 13, **characterized in that** the file download method further comprises:
after downloading of the file is interrupted, demanding the server (110) to check a user identification; and
after the server (110) confirms that the user identification is valid, re-downloading the file.

## Patentansprüche

1. Server (110), umfassend:
einen Prozessor (112), angebracht zur Steuerung von Operationen des Servers (110); und
eine Speichereinheit (114), angebracht zur Speicherung mindestens eines Programmcodes (116), wobei der Programmcode (116) angebracht ist, um:
von einem elektronischen Gerät (120) über ein Netzwerk gelesen zu werden;
und durch einen Browser des elektronischen Gerätes (120) ausgeführt zu werden;
wobei wenn durch den Browser ausgeführt, der Browser die folgenden Schritte durchführt:
Verifizieren eines Nutzer-Zugangs durch Verwenden eines Passwortes und einer Nutzer-ID, die durch den Nutzer zum Identifizieren des Nutzers eingegeben wurde;
Empfangen (204) eines Upload-Befehls, der durch Ziehen einer Datei auf eine spezifische Webseite generiert wird;
Kopieren (204) der Datei entsprechend dem Upload-Befehl zu einem virtuellen Dateisystem, das durch den Browser bereitgestellt ist;
Partitionieren (206) einer Datei in dem virtuellen Dateisystem in eine Vielzahl von Anteilen; und
sequenzielles Uploaden (208) der Anteile auf den Server (110) über das Netzwerk, und Aufzeichnen (208) eines Upload-Fortschrittes der Datei;
wobei wenn ein Uploaden der Datei unterbrochen ist, der Browser die folgenden Schritte durchführt:
Abbrechen (210) eines aktuell übertragenen Anteils der Vielzahl der Anteile; und
temporäres Speichern der empfangenen Anteile der Datei in der Speichereinheit (114); und
wenn ein Uploaden der Datei fortgesetzt wird, der Browser die folgenden Schritte (212) durchführt:
Auffordern des Servers (110), zu überprüfen, ob der Nutzer-Zugang noch gültig ist;
Vergleichen des aufgezeichneten Upload-Fortschrittes mit einem Upload-Fortschritt der Datei, die durch den Server (110) aufgezeichnet wurde, um ein Vergleichsergebnis zu generieren;
Übertragen der verbleibenden Datei-Bereiche, die noch nicht auf den Server (110) übertragen wurden entsprechend dem Vergleichsergebnis; und
Löschen (213) der temporär in der Speichereinheit (114) gespeicherten Datei und des aufgezeichneten Upload-Fortschrittes, wenn alle Datei-Bereiche auf den Server (110) hochgeladen sind.

2. Server (110) nach Anspruch 1, angepasst, um den Upload-Fortschritt der Datei aufzuzeichnen, wenn ein elektronisches Gerät (120) über das Netzwerk sequenziell die Vielzahl der Anteile auf den Server (110) hochlädt.

3. Server (110) nach Anspruch 2, angepasst, um nur diese Datei-Bereiche zu empfangen, die noch nicht empfangen wurden, wenn die Datei erneut durch ein elektronisches Gerät (120) hochgeladen wird.

4. Server (110) nach Anspruch 3, angepasst, um nachdem das Uploaden einer Datei unterbrochen ist, zu bestätigen, ob eine Nutzer-Identifizierung des elektronischen Gerätes (120) gültig ist, bevor dem elektronischen Gerät (120) ein erneutes Uploaden der Datei erlaubt wird.

5. Datei-Upload-Verfahren durch einen Browser, das Datei-Upload-Verfahren umfassend:
Verifizieren eines Nutzer-Zugangs durch Verwenden eines Passwortes und einer Nutzer-ID, die durch den Nutzer zum Identifizieren des Nutzers eingegeben wurde;
Empfangen (204) eines Upload-Befehls, der durch Ziehen einer Datei auf eine spezifische Webseite generiert wird;
Kopieren (204) der Datei entsprechend dem Upload-Befehl auf ein virtuelles Dateisystem, das durch den Browser bereitgestellt ist;
Partitionieren (206) der Datei in dem virtuellen Dateisystem in eine Vielzahl von Anteilen;
sequenzielles Uploaden (208) der Anteile auf den Server (110) über das Netzwerk;
Aufzeichnen (208) eines Upload-Fortschrittes der Datei in Echtzeit;
worin der Browser die folgenden Schritte durchführt, wenn ein Uploaden der Datei unterbrochen ist:
Abbrechen (210) eines aktuell übertragenen Anteils der Vielzahl der Anteile; und
temporäres Speichern der empfangenen Anteile der Datei; und
worin der Browser die folgenden Schritte (212) durchführt, wenn ein Uploaden der Datei fortgesetzt wird:
Auffordern des Servers (110), zu überprüfen, ob der Nutzer-Zugang noch gültig ist;
Vergleichen des aufgezeichneten Upload-Fortschrittes mit einem Upload-Fortschritt der Datei, die durch den Server (110) aufgezeichnet wurde, um ein Vergleichsergebnis zu generieren;
Übermittlung der verbleibenden Datei-Bereiche, die noch nicht auf den Server (110) übertragen wurden entsprechend dem Vergleichsergebnis; und
Löschen (213) der temporär gespeicherten Dateien und des aufgezeichneten Upload-Fortschrittes, wenn alle Datei-Bereiche auf den Server (110) hochgeladen sind.

6. Datei-Upload-Verfahren nach Anspruch 5, **dadurch gekennzeichnet, dass** das Datei-Upload-Verfahren weiter umfasst:
wenn ein Uploaden der Datei unterbrochen ist und die Datei erneut hochgeladen wird, Vergleichen des aufgezeichneten Upload-Fortschrittes mit einem Upload-Fortschritt der Datei, die durch den Server (110) aufgezeichnet wurde, um einen tatsächlichen Upload-Fortschritt der Datei zu bestätigen; und
worin der Schritt des Übertragens verbleibender Datei-Bereiche, die noch nicht auf den Server (110) gemäß dem aufgezeichneten Upload-Fortschritt übertragen wurden, umfasst:
Übertragen der verbliebenen Datei-Bereiche, die noch nicht auf den Server (110) übermittelt wurden, gemäß dem tatsächlichen Upload-Fortschritt der Datei.

7. Datei-Upload-Verfahren nach Anspruch 5, **dadurch gekennzeichnet, dass** das Datei-Upload-Verfahren weiter umfasst:
Auffordern des Servers (110), eine Nutzer-Identifizierung zu überprüfen, nachdem ein Uploaden der Datei unterbrochen ist, und
erneutes Uploaden der Datei, nachdem der Server (110) bestätigt, dass die Nutzer-Identifizierung gültig ist.

8. Server (110), umfassend:
einen Prozessor (112), vorgesehen, um die Operationen des Servers (110) zu steuern; und
eine Speichereinheit (114), vorgesehen, um mindestens einen Programmcode (116) zu speichern, worin der Programmcode (116) vorgesehen ist, um:
von einem elektronischen Gerät (120) über ein Netzwerk gelesen zu werden;
durch einen Browser des elektronischen Gerätes (120) ausgeführt zu werden;
wenn durch den Browser ausgeführt, den Browser zur Durchführung der folgenden Schritte zu veranlassen:
Verifizieren eines Nutzer-Zugangs durch Verwenden eines Passwortes und einer Nutzer-ID, die durch den Nutzer zum Identifizieren des Nutzers eingegeben wurde;
Empfangen (404) eines Download-Befehls;
sequenzielles Downloaden (406) mehrerer Datei-Bereiche entsprechend dem Download-Befehl des Servers (110) auf ein virtuelles Dateisystem, das durch den Browser über das Netzwerk bereitgestellt ist; und
Aufzeichnen (406) des Download-Fortschrittes der Datei in Echtzeit, um einen aufgezeichneten Download-Fortschritt berechnen zu können;
wenn Downloaden der Datei unterbrochen ist, den Browser zur Durchführung der folgenden Schritte zu veranlassen:
Aufgeben (408) eines aktuell übertragenen Bereichs der mehreren Bereiche; und
temporäres Speichern der empfangenen Bereiche der Datei in der Speichereinheit (114); und
wenn Downloaden der Datei fortgesetzt wird, den Browser zur Durchführung der folgenden Schritte zu veranlassen:
Auffordern des Servers (110), zu überprüfen, ob der Nutzer-Zugang noch gültig ist;
Vergleichen des aufgezeichneten Download-Fortschrittes mit einem Download-Fortschritt der Datei, der durch den Server (110) aufgezeichnet wurde, um ein Vergleichsergebnis zu generieren;
Downloaden (410) der verbleibenden Datei-Bereiche, die noch nicht auf das virtuelle Dateisystem heruntergeladen wurden entsprechend dem Vergleichsergebnis; und
wenn alle Datei-Bereiche auf das virtuelle Dateisystem heruntergeladen sind, Kopieren (412) der Datei in das Dateisystem des elektronischen Gerätes (120); und Löschen (414) der temporär in der Speichereinheit (114) gespeicherten Datei und des aufgezeichneten Upload-Fortschrittes.

9. Server (110) nach Anspruch 8, welcher angepasst ist, einen Download-Fortschritt der Datei in Echtzeit aufzuzeichnen, wenn das elektronische Gerät (120) über das Netzwerk sequenziell mehrere Bereiche der Datei vom Server (110) auf das vom Server bereitgestellte virtuelle Dateisystem herunterlädt.

10. Server (110) nach Anspruch 9, welcher angepasst ist, den aufgezeichneten Download-Fortschritt mit dem Download-Fortschritt der Datei, der durch das elektronische Gerät (120) aufgezeichnet wurde, zu vergleichen, wenn der Download der Datei unterbrochen ist und die Datei durch das elektronische Gerät (120) erneut heruntergeladen wird.

11. Server (110) nach Anspruch 9, welcher angepasst ist, die Datei erneut herunterzuladen, so dass nur Datei-Bereiche, die noch nicht von dem elektronischen Gerät empfangen wurden, übertragen werden, anstatt darüber hinaus bereits empfangene Datei-Bereiche zu übertragen.

12. Server (110) nach Anspruch 11, welcher angepasst ist, um nachdem das Downloaden einer Datei unterbrochen ist, zu bestätigen, ob eine Nutzer-Identifizierung des elektronischen Gerätes (120) gültig ist, bevor dem elektronischen Gerät (120) ein erneutes Downloaden der Datei ermöglicht wird.

13. Datei-Download-Verfahren durch einen Browser, wobei das Datei-Download-Verfahren umfasst:
Verifizieren eines Nutzer-Accounts durch Verwenden eines Passwortes und einer Nutzer-ID, die durch den Nutzer zum Identifizieren des Nutzers eingegeben wurde;
Empfangen (404) eines Download-Befehls;
sequenzielles Downloaden (406) mehrerer Datei-Bereiche gemäß dem Download-Befehl auf ein vom Browser bereitgestelltes, virtuelles Dateisystem über ein Netzwerk, und Aufzeichnen eines Download-Fortschrittes der Datei;
wenn ein Downloaden der Datei unterbrochen ist, den Browser zur Durchführung der folgenden Schritte (408) zu veranlassen; Abbrechen eines aktuell übertragenen Bereichs der mehreren Bereiche der; und temporäres Speichern der empfangenen Bereiche der Datei; und
wenn Downloaden der Datei fortgesetzt wird, den Browser zur Durchführung der folgenden Schritte (408) zu veranlassen:
Auffordern des Servers (110), zu überprüfen, ob der Nutzer-Zugang noch gültig ist;
Vergleichen des aufgezeichneten Download-Fortschrittes mit einem Download-Fortschritt der Datei, der durch den Server (110) aufgezeichnet wurde, um ein Vergleichsergebnis zu generieren;
Downloaden (410) der verbleibenden Datei-Bereiche, die noch nicht auf den Server (110) heruntergeladen wurden entsprechend dem Vergleichsergebnis; und
Löschen (414) der temporär gespeicherten Dateien und des aufgezeichneten Upload-Fortschrittes, wenn alle Datei-Bereiche auf den Server (110) hochgeladen sind; und
Kopieren (412) der Datei auf das Dateisystem des elektronischen Gerätes (120), wenn alle Datei-Bereiche auf das virtuelle Dateisystem heruntergeladen sind.

14. Datei-Download-Verfahren nach Anspruch 13, **dadurch gekennzeichnet, dass** das Datei-Download-Verfahren weiter umfasst:
Vergleichen des aufgezeichneten Download-Fortschrittes mit einem Download-Fortschritt der Datei, der durch den Server (110) aufgezeichnet wurde, um einen tatsächlichen Download-Fortschritt der Datei zu bestätigen, wenn ein Downloaden der Datei unterbrochen ist und die Datei erneut heruntergeladen wird; und
worin der Schritt des Downloadens verbleibender Datei-Bereiche, die noch nicht auf den Server (110) heruntergeladen wurden, gemäß dem aufgezeichneten Upload-Fortschritt umfasst:
Downloaden der verbliebenen Datei-Bereiche auf das virtuelle Dateisystem, gemäß dem tatsächlichen, bestätigten Download-Fortschritt der Datei.

15. Datei-Download-Verfahren nach Anspruch 13, **dadurch gekennzeichnet**, das Datei-Download-Verfahren weiter umfasst:
Auffordern des Servers (110), eine Nutzer-Identifizierung zu überprüfen, nachdem ein Downloaden der Datei unterbrochen ist, und
erneutes Downloaden der Datei, nachdem der Server (110) bestätigt, dass die Nutzer-Identifizierung gültig ist.

## Revendications

1. Serveur (110), comprenant :
un processeur (112), conçu pour commander des opérations du serveur (110) ; et
une unité de stockage (114), conçue pour stocker au moins un code de programme (116), le code de programme (116) étant conçu pour :
être lu par un dispositif électronique (120) par l'intermédiaire d'un réseau ;
être exécuté par un navigateur du dispositif électronique (120) ;
lorsqu'il est exécuté par ledit navigateur, faire que le navigateur exécute les étapes suivantes :
la vérification d'un compte d'utilisateur à l'aide d'un mot de passe et d'un identifiant d'utilisateur entrés par l'utilisateur pour identifier l'utilisateur,
la réception (204) d'une commande de téléchargement vers l'amont générée par l'entraînement d'un fichier vers une page web spécifique ;
la copie (204) du fichier correspondant à la commande de téléchargement vers l'amont vers un système de fichier virtuel fourni par le navigateur ;
le partitionnement (206) d'un fichier dans le système de fichier virtuel en une pluralité de parties ; et
le téléchargement vers l'amont séquentiel (208) des parties vers le serveur (110) par l'intermédiaire du réseau, et l'enregistrement (208) d'une progression de téléchargement vers l'amont du fichier ;
lorsque le téléchargement vers l'amont du fichier est interrompu, faire que le navigateur exécute les étapes suivantes :
l'abandon (210) d'une partie en cours de transmission de la pluralité de parties ; et
le stockage temporaire des parties reçues du fichier dans l'unité de stockage (114) ; et
lorsque le téléchargement vers l'amont du fichier reprend, faire que le navigateur exécute les étapes suivantes (212) :
la demande au serveur (110) de vérifier si le compte d'utilisateur est toujours valide ;
la comparaison de la progression de téléchargement vers l'amont enregistrée avec une progression de téléchargement vers l'amont du fichier enregistrée par le serveur (110) pour générer un résultat de comparaison ;
la transmission des parties restantes du fichier qui n'ont pas encore été transmises au serveur (110) en fonction du résultat de comparaison ; et
lorsque toutes les parties du fichier sont téléchargées vers l'amont vers le serveur (110), la suppression (213) du fichier stocké temporairement dans l'unité de stockage (114) et de la progression de téléchargement vers l'amont enregistrée.

2. Serveur (110) selon la revendication 1, adapté pour, lorsque le dispositif électronique (120) télécharge vers l'amont de manière séquentielle la pluralité de parties vers le serveur (110) par l'intermédiaire du réseau, enregistrer la progression de téléchargement vers l'amont du fichier.

3. Serveur (110) selon la revendication 2, adapté pour, lorsque le fichier est à nouveau téléchargé vers l'amont par le dispositif électronique (120), recevoir uniquement les parties du fichier qui n'ont pas encore été reçues.

4. Serveur (110) selon la revendication 3, adapté pour, après l'interruption du téléchargement vers l'amont du fichier, confirmer si une identification d'utilisateur du dispositif électronique (120) est valide avant de permettre au dispositif électronique (120) de télécharger à nouveau vers l'amont le fichier.

5. Procédé de téléchargement vers l'amont de fichier par un navigateur, le procédé de téléchargement vers l'amont de fichier comprenant :
la vérification d'un compte d'utilisateur à l'aide d'un mot de passe et d'un identifiant d'utilisateur entrés par l'utilisateur pour identifier l'utilisateur ;
la réception (204) d'une commande de téléchargement vers l'amont générée par l'entraînement d'un fichier vers une page web spécifique ;
la copie (204) du fichier correspondant à la commande de téléchargement vers l'amont vers un système de fichier virtuel fourni par le navigateur ;
le partitionnement (206) du fichier dans le système de fichier virtuel en une pluralité de parties ;
le téléchargement vers l'amont séquentiel (208) des parties vers un serveur (110) par l'intermédiaire d'un réseau ;
l'enregistrement (208) d'une progression de téléchargement vers l'amont du fichier en temps réel ;
lorsque le téléchargement vers l'amont du fichier est interrompu, faire que le navigateur exécute les étapes suivantes :
l'abandon (210) d'une partie en cours de transmission de la pluralité de parties ; et
le stockage temporaire des parties reçues du fichier ; et
lorsque le téléchargement vers l'amont du fichier reprend, faire que le navigateur exécute les étapes suivantes (212) :
la demande au serveur (110) de vérifier si le compte d'utilisateur est toujours valide ;
la comparaison de la progression de téléchargement vers l'amont enregistrée avec une progression de téléchargement vers l'amont du fichier enregistrée par le serveur (110) pour générer un résultat de comparaison ;
la transmission des parties restantes du fichier qui n'ont pas encore été transmises au serveur (110) en fonction du résultat de comparaison ; et
lorsque toutes les parties du fichier sont téléchargées vers l'amont vers le serveur (110), la suppression (213) du fichier stocké temporairement et de la progression de téléchargement vers l'amont enregistrée.

6. Procédé de téléchargement vers l'amont de fichier selon la revendication 5, **caractérisé en ce que** le procédé de téléchargement vers l'amont de fichier comprend en outre :
lorsque le téléchargement vers l'amont du fichier est interrompu et que le fichier est à nouveau téléchargé vers l'amont, la comparaison de la progression de téléchargement vers l'amont enregistrée avec une progression de téléchargement vers l'amont du fichier enregistrée par le serveur (110), pour confirmer une progression de téléchargement vers l'amont réelle du fichier ; et
l'étape de transmission des parties restantes du fichier qui n'ont pas encore été transmises au serveur (110) en fonction de la progression de téléchargement vers l'amont enregistrée comprend :
la transmission des parties restantes du fichier qui n'ont pas encore été transmises au serveur (110) en fonction de la progression de téléchargement vers l'amont réelle du fichier.

7. Procédé de téléchargement vers l'amont de fichier selon la revendication 5 **caractérisé en ce que** le procédé de téléchargement vers l'amont de fichier comprend en outre :
après l'interruption du téléchargement vers l'amont du fichier, la demande au serveur (110) de vérifier une identification d'utilisateur ; et
après que le serveur (110) confirme que l'identification d'utilisateur est valide, le nouveau téléchargement vers l'amont du fichier.

8. Serveur (110), comprenant :
un processeur (112), conçu pour commander des opérations du serveur (110) ; et
une unité de stockage (114), conçue pour stocker au moins un code de programme (116), le code de programme (116) étant conçu pour :
être lu par un dispositif électronique (120) par l'intermédiaire d'un réseau ;
être exécuté par un navigateur du dispositif électronique (120) ;
lorsqu'il est exécuté par ledit navigateur, faire que le navigateur exécute les étapes suivantes :
la vérification d'un compte d'utilisateur à l'aide d'un mot de passe et d'un identifiant d'utilisateur entrés par l'utilisateur pour identifier l'utilisateur ;
la réception (404) d'une commande de téléchargement vers l'aval ;
le téléchargement vers l'aval séquentiel (406) d'une pluralité de parties du fichier correspondant à la commande de téléchargement vers l'aval du serveur (110) vers un système de fichier virtuel fourni par le navigateur par l'intermédiaire du réseau ; et
l'enregistrement (406) d'une progression de téléchargement vers l'aval du fichier en temps réel pour calculer une progression de téléchargement vers l'aval enregistrée ;
lorsque le téléchargement vers l'aval du fichier est interrompu, faire que le navigateur exécute les étapes suivantes :
l'abandon (408) d'une partie en cours de transmission de la pluralité de parties ; et
le stockage temporaire des parties reçues du fichier dans une unité de stockage (114) ; et
lorsque le téléchargement vers l'aval du fichier reprend, faire que le navigateur exécute les étapes suivantes :
la demande au serveur (110) de vérifier si le compte d'utilisateur est toujours valide ;
la comparaison de la progression de téléchargement vers l'aval enregistrée avec une progression de téléchargement vers l'aval du fichier enregistrée par le serveur (110) pour générer un résultat de comparaison ;
le téléchargement vers l'aval (410) des parties restantes du fichier qui n'ont pas encore été téléchargées vers l'aval vers le système de fichier virtuel en fonction du résultat de comparaison ; et
lorsque toutes les parties du fichier sont téléchargées vers l'aval vers le système de fichier virtuel, la copie (412) du fichier vers le système de fichier virtuel du dispositif électronique (120), la suppression (414) du fichier stocké temporairement dans l'unité de stockage (114) et la progression de téléchargement vers l'aval enregistrée.

9. Serveur (110) selon la revendication 8, adapté pour, lorsque le dispositif électronique (120), par l'intermédiaire du réseau, télécharge vers l'aval de manière séquentielle une pluralité de parties du fichier du serveur (110) vers le système de fichier virtuel fourni par le navigateur, enregistrer une progression de téléchargement vers l'aval du fichier en temps réel.

10. Serveur (110) selon la revendication 9, adapté pour, lorsque le téléchargement vers l'aval du fichier est interrompu et que le fichier est à nouveau téléchargé vers l'aval par le dispositif électronique (120), comparer la progression de téléchargement vers l'aval enregistrée avec une progression de téléchargement vers l'aval du fichier enregistrée par le dispositif électronique (120).

11. Serveur (110) selon la revendication 9, adapté pour à nouveau télécharger vers l'aval le fichier de sorte que seulement les parties du fichier qui n'ont pas encore été reçues par le dispositif électronique sont transférées, plutôt que de transférer également des parties déjà reçues du fichier.

12. Serveur (110) selon la revendication 11, adapté pour, après l'interruption du téléchargement vers l'aval du fichier, confirmer si une identification d'utilisateur du dispositif électronique (120) est valide avant de permettre au dispositif électronique (120) de télécharger à nouveau vers l'aval le fichier.

13. Procédé de téléchargement vers l'aval de fichier par un navigateur, le procédé de téléchargement vers l'aval de fichier comprenant :
la vérification d'un compte d'utilisateur à l'aide d'un mot de passe et d'un identifiant d'utilisateur entrés par l'utilisateur pour identifier l'utilisateur ;
la réception (404) d'une commande de téléchargement vers l'aval ;
le téléchargement vers l'aval séquentiel (406) d'une pluralité de parties du fichier correspondant à la commande de téléchargement vers l'aval vers un système de fichier virtuel fourni par le navigateur par l'intermédiaire d'un réseau, et l'enregistrement d'une progression de téléchargement vers l'aval du fichier ;
lorsque le téléchargement vers l'aval du fichier est interrompu, faire que le navigateur exécute les étapes suivantes (408) :
l'abandon d'une partie en cours de transmission de la pluralité de parties ; et
le stockage temporaire des parties reçues du fichier ;
lorsque le téléchargement vers l'aval du fichier reprend, faire que le navigateur exécute les étapes suivantes :
la demande à un serveur (110) de vérifier si le compte d'utilisateur est toujours valide ;
la comparaison de la progression de téléchargement vers l'aval enregistrée avec une progression de téléchargement vers l'aval du fichier enregistrée par le serveur (110) pour générer un résultat de comparaison ;
le téléchargement vers l'aval (410) des parties restantes du fichier qui n'ont pas encore été téléchargées vers l'aval vers le système de fichier virtuel en fonction du résultat de comparaison ; et
lorsque toutes les parties du fichier sont téléchargées vers l'amont vers le serveur (110), la suppression (414) du fichier stocké temporairement et la progression de téléchargement vers l'amont enregistrée ; et
lorsque toutes les parties du fichier sont téléchargées vers l'aval vers le système de fichier virtuel,
la copie (412) du fichier vers un système de fichier du dispositif électronique (120).

14. Procédé de téléchargement vers l'aval de fichier selon la revendication 13, **caractérisé en ce que** le procédé de téléchargement vers l'aval de fichier comprend en outre :
lorsque le téléchargement vers l'aval du fichier est interrompu et que le fichier est à nouveau téléchargé vers l'aval, la comparaison de la progression de téléchargement vers l'aval enregistrée avec une progression de téléchargement vers l'aval du fichier enregistrée par le serveur (110), pour confirmer une progression de téléchargement vers l'aval réelle du fichier ; et
l'étape de téléchargement vers l'aval des parties restantes du fichier qui n'ont pas encore été téléchargées vers l'aval vers le système de fichier virtuel en fonction de la progression de téléchargement vers l'aval enregistrée comprend :
le téléchargement vers l'aval des parties restantes du fichier vers le système de fichier virtuel en fonction de la progression de téléchargement vers l'aval réelle du fichier qui est confirmée.

15. Procédé de téléchargement vers l'aval de fichier selon la revendication 13, **caractérisé en ce que** le procédé de téléchargement vers l'aval de fichier comprend en outre :
après l'interruption du téléchargement vers l'aval du fichier, la demande au serveur (110) de vérifier une identification d'utilisateur ; et
après que le serveur (110) confirme que l'identification de l'utilisateur est valide, le nouveau téléchargement vers l'aval du fichier.
